# EUROPEAN PATENT SPECIFICATION

(11) **EP 3 970 998 B1**
(45) Date of publication and mention of the grant of the patent: **20.03.2024**
(21) Application number: 21195875.6
(22) Date of filing: 10.09.2021
(51) Int. Cl.: B60C 19/00

(54) **PNEUMATIC TIRE AND METHOD OF MANUFACTURING PNEUMATIC TIRE**
LUFTREIFEN UND VERFAHREN ZUR HERSTELLUNG EINES LUFTREIFENS
PNEU ET SON PROCÉDÉ DE FABRICATION

(30) Priority: 17.09.2020 JP 2020156075
(43) Date of publication of application: 23.03.2022
(73) Proprietor: Toyo Tire Corporation, Itami-shi, Hyogo 664-0847 (JP)
(72) Inventor: TSUJI, Noriyuki, Hyogo, 664-0847 (JP)
(74) Representative: Müller-Boré & Partner Patentanwälte PartG mbB

(56) References cited:
- EP-A1- 1 529 665
- EP-A1- 1 577 123
- EP-A1- 2 239 152
- US-A1- 2019 143 764

## Description

The present invention relates to pneumatic tires provided with a sound damper and a method of manufacturing pneumatic tires.

Cavernous resonance occurs in pneumatic tires mounted on a vehicle as the vehicle travels due to the air in the tire inner cavity. The sound generated by cavernous resonance in the tire is transmitted to the vehicle, causing noise in the vehicle interior. Therefore, measures against tire cavernous resonance have been taken to reduce the noise.

Patent literature 1 discloses a related-art pneumatic tire with a sound damper, which is comprised of a pneumatic tire and a sound damper mounted to the tire inner cavity. The sound damper is formed into a ring by causing the end faces of an elongated sponge member provided along the circumferential direction of the tire to abut each other. The sound damper is formed such that the abutting surface produced by causing the end faces of the sponge member to abut each other is substantially planar.

[Patent literature 1] Japanese Patent Application Publication No. 2009-202856
In the pneumatic tire with a sound damper disclosed in patent literature 1, deformation at the end faces of sponge member, occurring when the elongated sponge member is provided in the circumferential direction to line the tire inner cavity surface, is not considered. In other words, the portions of the end faces of the sponge member, provided in the circumferential direction to line the tire inner cavity surface, toward the inner circumference project in the axial direction of the sponge member with respect to the portions toward the outer circumference, with the result that, when the end faces are caused to abut each other, the overlapping portion toward the inner circumference undergoes compression deformation, creating a non-uniform state in the circumferential direction. Accordingly, degradation in the sound damping performance due to imbalance of the weight and reduced durability of the sponge member cause concern.

Document US 2019/143764 A1 describes a tire comprising a circumferential tread having an outer tread surface and an inner liner surface, at least two spaced-apart beads, sidewall portions extending between the tread and the beads, and a beltlike foam noise damper having first and second terminal ends. The noise damper lines the inner liner surface. The noise damper is adhesively secured to the inner liner surface, and the terminal ends of the noise damper are cut at an angle of less than 90 degrees. The overlapped second terminal end of the foam is joined to the first terminal end by the adhesive present underneath the second terminal end.

Document EP 1 577 123 A1 describes a pneumatic tire with a noise damper made of a spongelike multi-cellular material. The noise damper is divided into small dampers to improve the high-speed durability of the tire. The noise damper is provided with a water-impermeable outer coating to prevent water from infiltrating into the spongelike multi-cellular material during transporting, store keeping and the like.

The present invention address the above-described issue, and a purpose thereof is to provide a pneumatic tire and a method of manufacturing a pneumatic tire capable of providing excellent sound damping performance.

An embodiment of the present invention relates to a pneumatic tire as set forth in the appended independent claim 1.

A pneumatic tire according to another embodiment of the present invention includes: a tire main body; and at least one sound damper formed by affixing a foam material having a plate shape to an inner cavity surface of the tire main body to form a ring shape, a size of one side, of two sides along a longitudinal direction, is smaller than the other side, with the one side being provided outward of a center in an axial direction of the tire main body, and the other side being provided toward the center, and end faces of the foam material in the longitudinal direction abutting each other and being bonded.

Another embodiment of the present invention relates to a method of manufacturing a pneumatic tire, as set forth in the appended independent claim 8.

According to the present invention, excellent sound damping performance can be provided.
Fig. 1 is a cross-sectional view showing a longitudinal cross section of a pneumatic tire according to embodiment 1 including a sound damper;
Fig. 2A is a perspective view showing an appearance of the sound damper presented when it is provided in the tire inner cavity, Fig. 2B is a side view of the sound damper presented before it is provided, and Fig. 2C is a plan view of the sound damper 30 presented before it is provided;
Fig. 3A is an enlarged view of the end face portions of the sound damper, and Fig. 3B is an enlarged view of the end face portions in a comparative example;
Figs. 4A, 4B and 4C are side views of the sound damper according to variations;
Fig. 5A is a plan view of the sound damper according to embodiment 2 presented before it is provided, and Fig. 5B is a side view of the sound damper presented before it is provided;
Fig. 6 is a cross-sectional view showing a part of the longitudinal cross section of the pneumatic tire to which the sound damper is affixed;
Fig. 7 is a cross-sectional view showing a part of the longitudinal cross section of the pneumatic tire to which two sound dampers are affixed;
Fig. 8A is a plan view of the sound damper according to embodiment 3 presented before it is provided, and Fig. 8B is a side view of the sound damper presented before it is provided;
Fig. 9 is a flowchart showing a method according to embodiment 4 for manufacturing the pneumatic tire;
Figs. 10A and 10B are schematic diagrams for illustrating steps of cutting the sound damper base member.

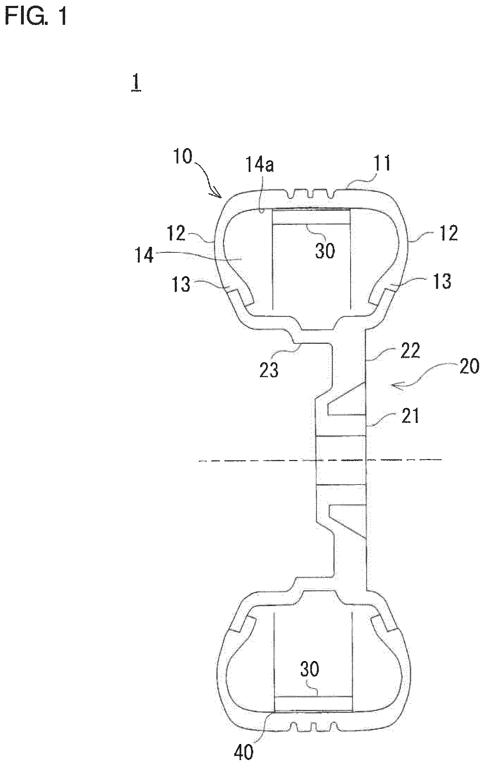

Hereinafter, the invention will be described based on preferred embodiments with reference to Figs. 1 through 10B. Identical or like constituting elements and members shown in the drawings are represented by identical symbols, and a duplicate description will be omitted as appropriate. The dimension of the members in the drawings shall be enlarged or reduced as appropriate to facilitate understanding. Those of the members that are not important in describing the embodiment are omitted from the drawings.

(First Embodiment) Fig. 1 is a cross-sectional view showing a longitudinal cross section of a pneumatic tire according to embodiment 1 including a sound damper. The pneumatic tire 1 includes a tire main body 10, a wheel 20, and a sound damper 30. The tire main body 10 comes into contact with the ground at a tread 11 formed in a shape of a ring. Side parts 12 are provided to be continuous with both ends of the tread 11 in the axial direction (direction of width of the tire), and a bead 13 is formed at the end of the side part 12 toward the wheel 20.

The wheel 20 is fitted at the center of the tire main body 10. The wheel 20 supports a rim 23, a disc 22 of the rim 23 extending radially around a hub 21 coupled to a wheel shaft to define a cylindrical shape. The bead 13 of the tire main body 10 is fitted to the rim 23. A tire inner cavity 14 bounded by the tire main body 10 and the rim 23 is filled with air.

The sound damper 30 is affixed by an adhesive 40 to an tire inner cavity surface 14a, which is a surface of the tread 11 facing the tire inner cavity 14. The sound damper 30 is a sponge formed by a foam material and is an open cell including a large number of gas cavities and allowing outside air to pass through. The sound damper 30 is made of, for example, flexible urethane foam. The sound damper 30 preferably has a density of 60 kg/m³ or lower and, more preferably, a density of 40 kg/m³ or lower from the perspective of weight balance in the pneumatic tire 1. Further, the sound damper 30 preferably has a pull strength of 30 kPa or more and a tearing strength of 2.0 N/cm or more (JIS K 6400-5) from the perspective of durability. The sound damper 30 is comprised of at least one member to form a ring shape on the tire inner cavity surface 14a. Two or more members of the sound damper 30 may form a ring.

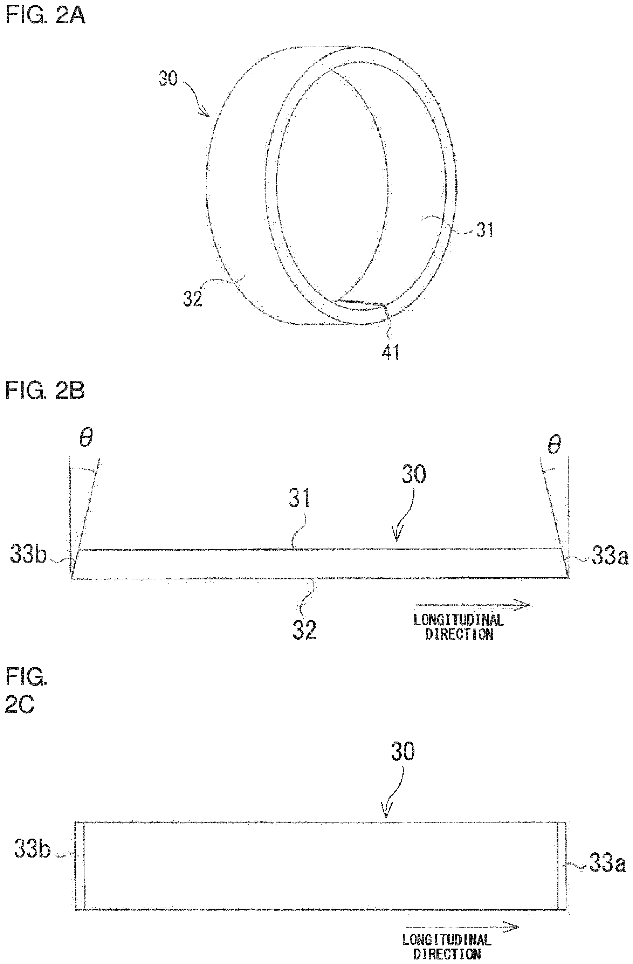

Fig. 2A is a perspective view showing an appearance of the sound damper 30 presented when it is provided in the tire inner cavity 14, Fig. 2B is a side view of the sound damper 30 presented before it is provided, and Fig. 2C is a plan view of the sound damper 30 presented before it is provided. As described above, the sound damper 30 forms a ring shape when it is provided on the tire inner cavity surface 14a. An outer circumferential surface 32 of the sound damper 30 is affixed to the tire inner cavity surface 14a by the adhesive 40, and an inner circumferential surface 31 of the sound damper 30 faces the tire inner cavity 14. Aside from using the adhesive 40, the outer circumferential surface 32 may be affixed to the tire inner cavity surface 14a by using a double-sided tape. It is preferable to use the adhesive 40 having a shear bond strength according to JIS K 6850 of 0.1 MPa or more, and, more preferably, 0.3 MPa or more from the perspective of durability.

As shown in Fig. 2B, the sound damper 30 has an elongated plate shape before it is provided in the tire inner cavity 14. The size of an inner circumferential surface 31, which is one surface of the sound damper 30, in the longitudinal direction is smaller than that of an outer circumferential surface 32, which is the other surface. The sound damper 30 is formed such that an end face 33a and an end face 33b at the respective ends in the longitudinal direction are tapered. The sides of the end face 33a and the end face 33b of the sound damper 30 toward the outer circumferential surface 32 bulge outward in the longitudinal direction with respect to the sides toward the inner circumferential surface 31, and the end faces are tapered in opposite directions at the same taper angle θ.

The size of the outer circumferential surface 32 of the sound damper 30 in the longitudinal direction may be not less than 100% and not more than 105% of the length of the inner circumference of the tire inner cavity surface 14a so as not to create a gap between the end faces when the sound damper 30 is affixed to the tire inner cavity surface 14a.

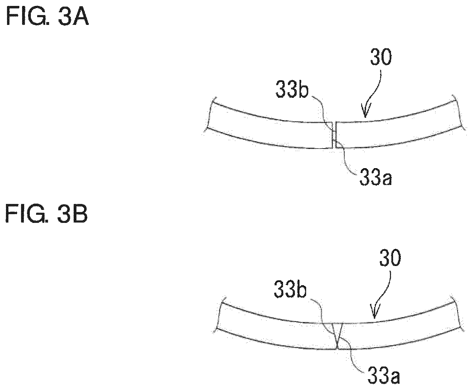

Fig. 3A is an enlarged view of the end face portions of the sound damper 30, and Fig. 3B is an enlarged view of the end face portions in a comparative example. As shown in Fig. 3A, the end face 33a and the end face 33b of the sound damper 30 caused to abut substantially in parallel to each other and are fixed by an adhesive 41 when the sound damper 30 is provided on the tire inner cavity surface 14a. Aside from using the adhesive 41, the end face 33a and the end face 33b of the sound damper 30 may be bonded by using a double-sided tape.

In the comparative example of Fig. 3B, the end face 33a and the end face 33b of the sound damper 30 are formed as surfaces having a taper angle θ=0, i.e., orthogonal to the longitudinal direction. When the sound damper 30 is affixed to the tire inner cavity surface 14a in this case, the sides of the end face 33a and the end face 33b toward the inner circumferential surface 31 will bulge with respect to the sides toward the outer circumferential surface 32 and overlap each other, and compression deformation results when the end face 33a and the end face 33b are bonded to each other.

A description will now be given of the performance of the pneumatic tire 1, highlighting the sound damper 30. As described above, the sound damper 30 in isolation has an elongated plate shape, and both the end face 33a and the end face 33b are formed to be inclined by the taper angle θ. The sound damper 30 is deformed at the end face 33a and the end face 33b when the sound damper 30 is affixed to the tire inner cavity surface 14a.

When the sound damper 30 is configured as a ring, the sides of the end face 33a and the end face 33b of the sound damper 30 toward the inner circumferential surface 31 are deformed to bulge in the tire circumferential direction (corresponding to the longitudinal direction of the sound damper 30) with respect to the sides toward the outer circumferential surface 32 so as to be parallel as they abut each other.

By causing the end face 33a and the end face 33b of the sound damper 30 to be parallel as they abut each other, the end faces can be fixed by the adhesive 41, without creating compression deformation as shown in Fig. 3B due to an overlap of the end faces. Suppression of compression deformation at the end face 33a and the end face 33b ensures that the density of the sound damper 30 in the circumferential direction is substantially uniform, imbalance of the weight is unlikely to occur, degradation of the sound damper 30 is inhibited, and sound damping performance is excellent.

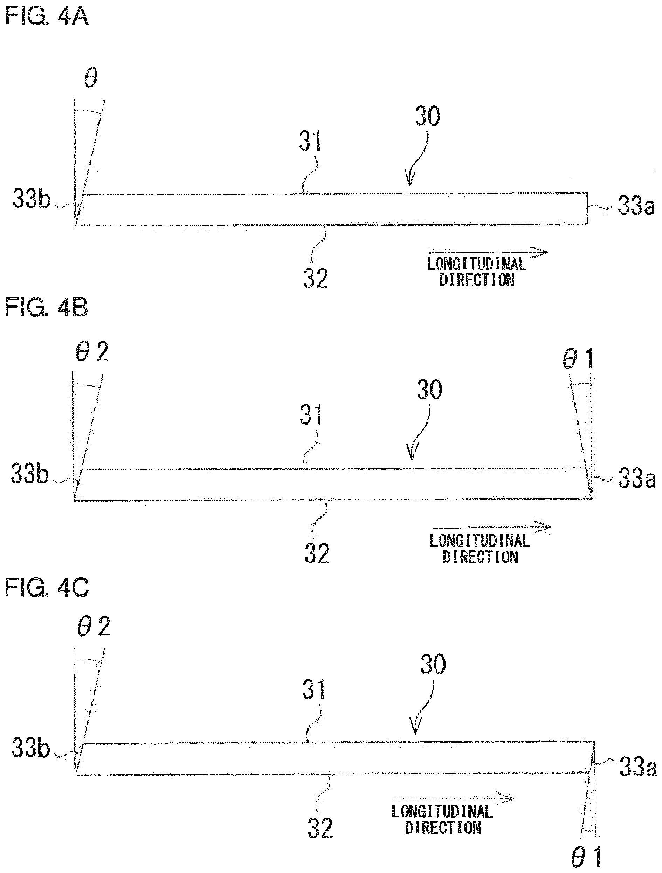

Figs. 4A, 4B and 4C are side views of the sound damper 30 according to variations. The end face 33a of the sound damper 30 shown in Fig. 4A is a surface orthogonal to the longitudinal direction. The side of the end face 33b of the sound damper 30 toward the outer circumferential surface 32 is tapered to bulge outward with respect to the side toward the inner circumferential surface 31, and the size of the inner circumferential surface 31 in the longitudinal direction is smaller than that of the outer circumferential surface 32.

The sides of the end face 33a and the end face 33b of the sound damper 30 shown in Fig. 4B toward the outer circumferential surface 32 are both tapered to bulge outward with respect to the sides toward the inner circumferential surface 31, but the taper angles θ1 and θ2 of the end faces differ. The size of the inner circumferential surface 31 of the sound damper 30 in the longitudinal direction is smaller than that of the outer circumferential surface 32.

The side of the end face 33a of the sound damper 30 shown in Fig. 4C toward the inner circumferential surface 31 is tapered to bulge outward with respect to the side toward the outer circumferential surface 32. The side of the end face 33b toward the outer circumferential surface 32 is tapered to bulge outward with respect to the side toward the inner circumferential surface 31. The taper angle θ1 of the end face 33a is smaller than the taper angle θ2 of the end face 33b, and the size of the inner circumferential surface 31 in the longitudinal direction is smaller than that of the outer circumferential surface 32.

In each of the cases of Fig. 4A, 4B and 4C, the inner circumferential surface 31 of the sound damper 30 is deformed to bulge at the end face 33a and the end face 33b when the sound damper 30 is provided on the tire inner cavity surface 14a, and an overlap occurring when the end faces are caused to abut each other is inhibited.

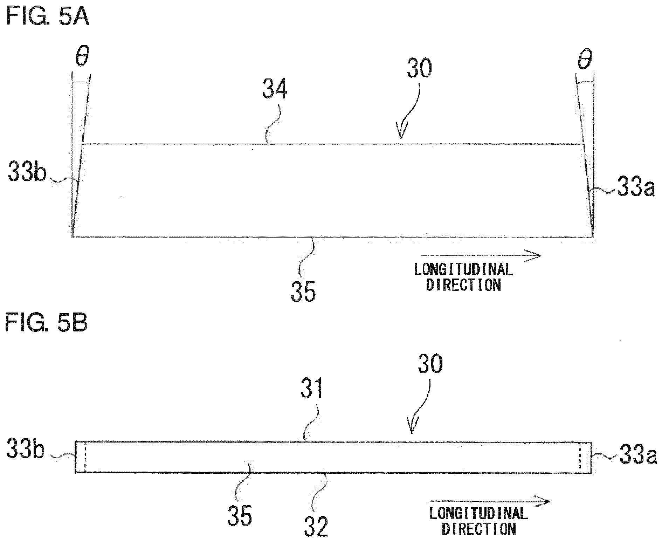

(Second Embodiment) Fig. 5A is a plan view of the sound damper 30 according to embodiment 2 presented before it is provided, and Fig. 5B is a side view of the sound damper 30 presented before it is provided. The sound damper 30 is formed such that the size of one side 34, of the two sides along the longitudinal direction, is smaller than the other side 35. The end face 33a and the end face 33b are tapered such that the sides thereof toward the side 35 bulge outward in the longitudinal direction with respect to the sides toward the side 34, and the end faces have the same taper angle θ.

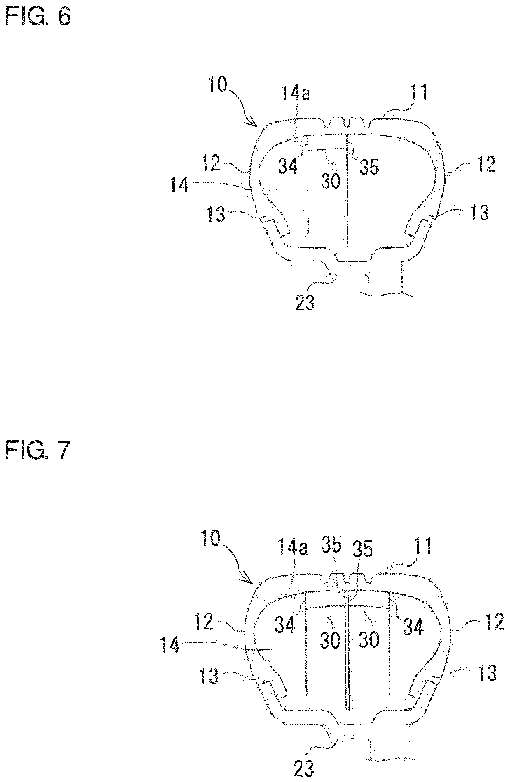

Fig. 6 is a cross-sectional view showing a part of the longitudinal cross section of the pneumatic tire 1 to which the sound damper 30 is affixed. The length of the circumference of the tire inner cavity surface 14a at the center in the axial direction of the tire is larger than the length of the circumference at a position close to the side part 12 and outward of the center. The sound damper 30 is affixed to the tire inner cavity surface 14a such that the side 35 is provided at a position toward the center, and the side 34 is provided at a position outward of the center. The sound damper 30 is comprised of at least one member to form a ring shape on the tire inner cavity surface 14a. Two or more members of the sound damper 30 may form a ring.

Since the side 34 is formed to have a size smaller than that of the other side 35, the end face 33a and the end face 33b of the sound damper 30 will be substantially parallel when the sound damper 30 is affixed to the tire inner cavity surface 14a so that compression deformation caused by an overlap can be inhibited. Suppression of compression deformation at the end face 33a and the end face 33b ensures that the density of the sound damper 30 in the circumferential direction is substantially uniform, imbalance of the weight is unlikely to occur, degradation of the sound damper 30 is inhibited, and sound damping performance is excellent.

Fig. 7 is a cross-sectional view showing a part of the longitudinal cross section of the pneumatic tire 1 to which two sound dampers 30 are affixed. The two sound dampers 30 are provided such that the sides 35 face each other. The two sound dampers 30 shown in Fig. 7 are formed such that the size of the side 34 of the respective sound dampers 30 is smaller than that of the other side 35 so that an overlap of the end face 33a and the end face 33b abutting each other can be inhibited. Two or more sound dampers 30 are arranged in the axial direction of the tire. It is preferred that the sides of the sound dampers 30 facing each other are arranged to create a gap as shown in Fig. 7. The sound dampers 30 may be arranged such that the sides facing each other abut and are in contact. In this case, abrasion caused by friction can be inhibited by bonding the abutting sides each other by an adhesive, etc.

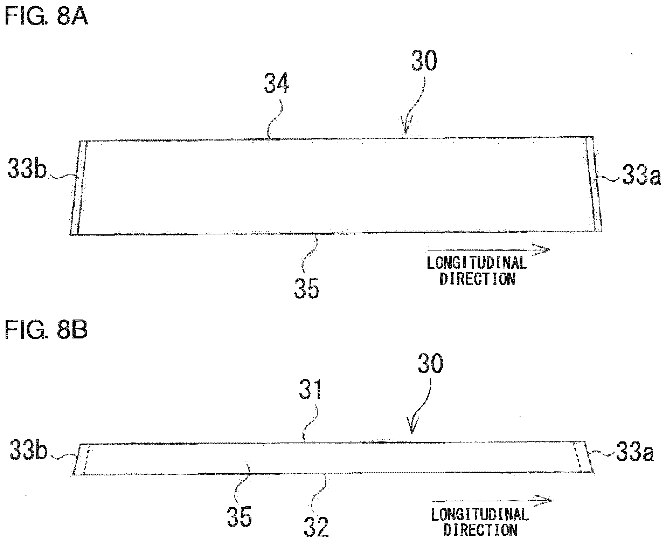

(Third Embodiment) Fig. 8A is a plan view of the sound damper 30 according to embodiment 3 before it is provided, and Fig. 8B is a side view of the sound damper 30 before it is provided. The sound damper 30 is formed such that the size of one side 34, of the two sides along the longitudinal direction, is smaller than the other side 35. The end face 33a and the end face 33b are tapered such that the sides thereof toward the side 35 bulge outward in the longitudinal direction with respect to the sides toward the side 34, and the end faces have the same taper angle θ.

Further, the sound damper 30 is formed such that the size of the inner circumferential surface 31 in the longitudinal direction is smaller than that of the outer circumferential surface 32. As in the case of Fig. 6 and Fig. 7, this ensures a small overlap at the end face 33a and the end face 33b when the sound damper 30 is affixed to the tire inner cavity surface 14a outward of the center in the axial direction so that compression deformation caused by an overlap can be inhibited. Suppression of compression deformation at the end face 33a and the end face 33b ensures that the density of the sound damper 30 in the circumferential direction is substantially uniform, imbalance of the weight is unlikely to occur, degradation of the sound damper 30 is inhibited, and sound damping performance is excellent.

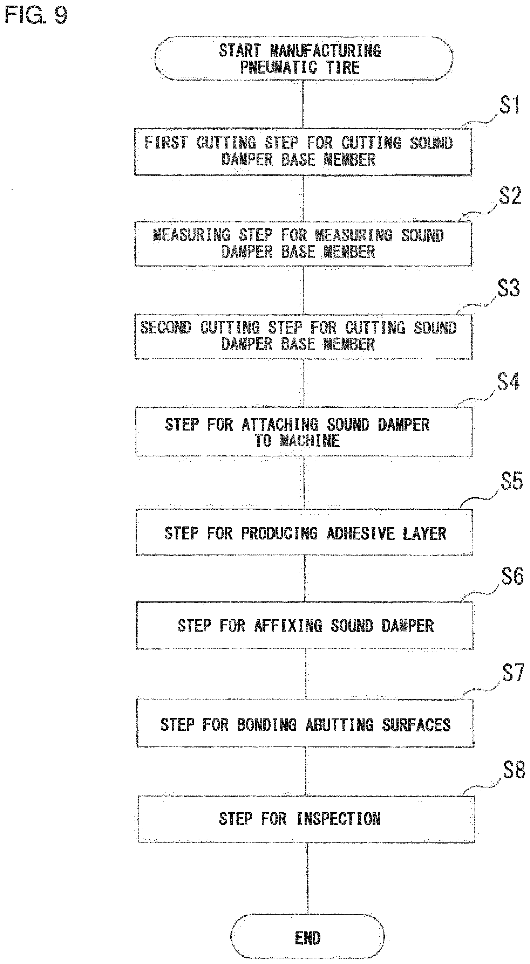

(Fourth Embodiment) In embodiment 4, a description will be given of a manufacturing method related to cutting of the sound damper 30 and affixed of the sound damper 30 to the tire inner cavity surface 14a. Fig. 9 is a flowchart showing a method according to embodiment 4 for manufacturing the pneumatic tire 1. Fig. 9 mainly shows steps related to the sound damper 30 in the pneumatic tire 1. It is assumed that the tire main body 10 and the wheel 20 are manufactured in advance before the pneumatic tire 1 is manufactured. Since the sound damper 30 is affixed to the tire inner cavity surface 14a of the tire main body 10, it is also assumed that an inner surface treatment step for removing a mold release agent attached to the tire inner cavity surface 14a, etc. has been completed.

The sound damper 30 is formed by cutting an elongated sound damper base member made of a foam material and having a rectangular cross section. The sound damper is formed into, for example, a roll or a sheet. Steps S1 through step S3 shown in Fig. 9 are cutting steps. The cutting steps include the first cutting step, the measurement step, and the second cutting step. In the first cutting step, the sound damper base member is cut at a surface inclined by a predetermined angle from a direction perpendicular to the axial direction of the base member (S1). In the measurement step, a predetermined size of the sound damper base member is taken from the cutting position in the first cutting step so as to set a cutting position in the subsequent cutting step (S2). In the second cutting step, the sound damper base member is cut at a plane inclined in a direction opposite to that of the first cutting step by a predetermined angle (S3).

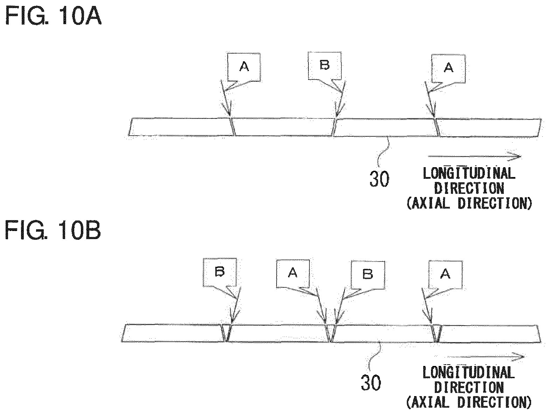

Figs. 10A and 10B are schematic diagrams for illustrating steps of cutting the sound damper base member. Referring to Fig. 10A and 10B, the direction of cutting the sound damper base member is indicated by arrows. The first cutting step is performed in the cutting direction indicated by an arrow A, and the second cutting step is performed in a cutting direction indicated by an arrow B. By repeating the first cutting step, the measurement step, and the second cutting step, the sound damper can be cut out from the sound damper base member. In the cutting step shown in Fig. 10A, no listings are produced from the cutting. In the cutting step shown in Fig. 10B, listings from the cutting are produced.

The first cutting step and the second cutting step differ in the angle of cutting. Therefore, a cutting machine adapted to change the angle of the cutting blade or a cutting machine including two blades at different angles is used.

The tire main body 10 and the sound damper 30 are attached to a machine for affixing (S4). An affixing machine of a cartridge type configured to retain the sound damper 30 with an arm or a pin and to roll up the sound damper 30 with a roller, etc. in a ring shape may be used for the purpose of inserting the sound damper 30 into the tire inner cavity 14, maintaining the size of the sound damper 30 smaller than the inner diameter of the bead 13 of the tire main body 10. The sound damper 30 includes the inner circumferential surface 31 and the outer circumferential surface 32. Therefore, steps for inverting the sound damper 30 upside down or rolling up the sound damper 30 in a cartridge in the opposite direction may be necessary depending on the cutting method.

In the subsequent step of producing an adhesive layer, an adhesive layer comprised of the adhesive 40 is produced on the tire inner cavity surface 14a or the outer circumferential surface 32 of the sound damper 30 (S5). In the step of affixing the sound damper 30, the tire inner cavity surface 14a or the outer circumferential surface 32 of the sound damper 30 is bonded to the adhesive layer once the adhesive layer is produced (S6). In the step of bonding the abutting surfaces, the end face 33a and the end face 33b of the sound damper 30 are caused to abut and are bonded by the adhesive 41 (S7). In the subsequent inspection step, an inspection is made to see whether the sound damper 30 is affixed to the tire inner cavity surface 14a as prescribed (S8), and the affixing of the sound damper 30 to the tire inner cavity surface 14a is completed. The tire main body 10 to which the sound damper 30 is affixed is fitted to the wheel 20, and the manufacturing of the pneumatic tire 1 is completed.

As shown in the aforementioned embodiments, the end face 33a and the end face 33b of the sound damper 30 are tapered as appropriate, but the sound damper 30 can be cut out from the sound damper base member easily as shown in Fig. 10A and Fig. 10B. Further, the machine for affixing makes it possible to affix the sound damper 30 to the tire inner cavity surface 14a by adjusting the orientation of the sound damper 30 depending on the way the sound damper 30 is cut out.

A description will be given of the characteristics of the pneumatic tire 1 and the method of manufacturing the pneumatic tire 1 according to the embodiments and the variations. The pneumatic tire 1 includes the tire main body 10 and at least one sound damper 30. The sound damper 30 is made of a foam material having a plate shape, the size of one surface of the material in the longitudinal direction being smaller than that of the other surface. The sound damper 30 is affixed to the tire inner cavity surface 14a to form a ring shape, with the other surface being toward the outer circumference, and the end faces in the longitudinal direction abut each other and are bonded. This inhibits an overlap of the end faces in the longitudinal direction and ensures excellent sound damping performance of the pneumatic tire 1.

At least one of the end faces of the sound damper 30 is tapered. This ensures that at least one end face that is tapered inhibits an overlap of the end faces in the pneumatic tire 1.

The sides of the end faces toward the other surface are tapered to bulge at the same angle of inclination. This ensures that the pneumatic tire 1 has equivalent shapes at the end faces.

Further, the size of the sound damper 30 toward the other surface in the longitudinal direction is not less than 100% and not more than 105% of the length of the inner circumference of the tire main body 10. This makes it difficult to create a gap between the end faces when the sound damper 30 is affixed to the pneumatic tire 1.

The pneumatic tire 1 includes the tire main body 10 and at least one sound damper 30. The sound damper 30 is made of a foam material having a plate shape, the size of one of the sides along the longitudinal direction being smaller than that of the other side. The sound damper 30 is affixed to the tire inner cavity surface 14a to form a ring shape, with the one side being provided outward of the center in the axial direction of the tire main body 10 and the other side being provided toward the center, and the end faces in the longitudinal direction abutting each other and being bonded. This inhibits an overlap of the end faces in the longitudinal direction and ensures excellent sound damping performance of the pneumatic tire 1.

The sides of the end faces toward the other side are tapered to bulge at the same angle of inclination. This ensures that the pneumatic tire 1 has equivalent shapes at the end faces.

The size of one surface of the sound damper 30 in the longitudinal direction is smaller than that of the other surface, and the sound damper 30 is affixed to the tire inner cavity surface 14a with the other surface being toward the outer circumference. This further inhibits an overlap of the end faces in the longitudinal direction and ensures excellent sound damping performance of the pneumatic tire 1.

Two or more sound dampers 30 are arranged in the axial direction of the tire main body 10. This ensures that the sound dampers 30 are formed to sandwich the center of the tire inner cavity surface 14a of the pneumatic tire 1 in the axial direction to reduce an overlap of the end faces in the longitudinal direction.

The method of manufacturing the pneumatic tire 1 includes the first cutting step, the measurement step, the second cutting step, and the affixing step. In the first cutting step, the elongated sound damper base member made of a foam material and having a rectangular cross section is cut at a surface inclined by a predetermined angle from a direction perpendicular to the axial direction. In the measurement step, a predetermined size of the sound damper base member is taken from the cutting position in the first cutting step so as to set a cutting position. In the second cutting step, the sound damper base member is cut at a plane inclined in a direction opposite to that of the first cutting step by a predetermined angle. In the affixing step, the sound damper 30 formed by the second cutting step is affixed to the tire inner cavity surface 14a of the pneumatic tire 1. According to the manufacturing method, the sound damper 30 can be formed by cutting the base member easily, and the manufacturing of the pneumatic tire 1 with a sound damper facilitated.

Described above is an explanation of the present invention based on exemplary embodiments. The embodiments are intended to be illustrative only and it will be understood to those skilled in the art that variations and modifications are possible within the claim scope of the present invention and that such variations and modifications are also within the claim scope of the present invention. Therefore, the description in this specification and the drawings shall be treated to serve illustrative purposes and shall not limit the scope of the invention.

1 pneumatic tire, 10 tire main body, 14a tire inner cavity surface (inner cavity surface), 30 sound damper
The present invention relates to pneumatic tires provided with a sound damper and a method of manufacturing pneumatic tires.

## Claims

1. A pneumatic tire (1) comprising:
a tire main body (10); and
at least one sound damper (30) formed by affixing a foam material having a plate shape to an inner cavity surface (14a) of the tire main body (10) to form a ring shape, a size of an inner circumferential surface (31) of the foam material in a longitudinal direction, being smaller than that of an outer circumferential surface (32), such that the outer circumferential surface (32) is toward an outer circumference, and end faces (33a, 33b) of the foam material in the longitudinal direction abut each other and are bonded,
**characterised in that**
the end faces (33a, 33b) are arranged to be parallel as they abut each other such that the end faces (33a, 33b) are fixed by an adhesive (41) without creating a compression deformation.

2. The pneumatic tire (1) according to claim 1, wherein
at least one of the end faces (33a, 33b) of the foam material is tapered.

3. The pneumatic tire (1) according to claim 1, wherein
the end faces (33a, 33b) of the foam material are tapered to bulge toward the other surface at the same angle of inclination.

4. The pneumatic tire (1) according to any one of claims 1 to 3, wherein
a size of the foam material at the outer circumferential surface (32) in the longitudinal direction is not less than 100% and not more than 105% of a length of the inner circumference of the tire main body (10).

5. The pneumatic tire (1) according to any one of claims 1 to 4, wherein
a size of one side (34) of the foam material, of two sides (34, 35) along a longitudinal direction, is smaller than the other side (35),
the sound damper (30) formed by affixing the foam material to the inner cavity surface (14a) of the tire main body (10) with the one side (34) being provided outward of a center in an axial direction of the tire main body (10), and the other side (35) being provided toward the center.

6. The pneumatic tire (1) according to claim 5, wherein
the end faces (33a, 33b) of the foam material are tapered to bulge toward the other side (35) at the same angle of inclination.

7. The pneumatic tire (1) according to claim 5 or 6, wherein
two or more sound dampers (30) are arranged in the axial direction of the tire main body (10).

8. A method of manufacturing a pneumatic tire (1), comprising:
cutting, in a first cutting step, an elongated sound damper base member made of a foam material and having a rectangular cross section at a surface inclined by a predetermined angle from a direction perpendicular to an axial direction;
taking a predetermined size of the sound damper base member from a cutting position in the first cutting step so as to set a cutting position;
cutting, in a second cutting step, the sound damper base member at a plane inclined in a direction opposite to that of the first cutting step by a predetermined angle;
wherein a size of an inner circumferential surface (31) of the foam material in a longitudinal direction being smaller than that of an outer circumferential surface (32), such that the outer circumferential surface (32) is toward an outer circumference;
forming a sound damper (30) by affixing the sound damper base member cut in the second cutting step to a tire inner cavity surface (14a) of the pneumatic tire (1), wherein end faces (33a, 33b) of the foam material in the longitudinal direction abut each other and are bonded;
arranging the end faces (33a, 33b) to be parallel as they abut each other; and
fixing the end faces (33a, 33b) by an adhesive (41) without creating a compression deformation.

## Patentansprüche

1. Luftreifen (1), aufweisend:
einen Reifenhauptkörper (10); und
zumindest einen Schalldämpfer (30), der durch Befestigen eines Schaumstoffmaterials mit einer Plattenform an einer inneren Hohlraumfläche (14a) des Reifenhauptkörpers (10) gebildet wird, um eine Ringform zu bilden, wobei eine Größe einer Innenumfangsfläche (31) des Schaumstoffmaterials in einer Längsrichtung kleiner ist als jene einer Außenumfangsfläche (32), so dass die Außenumfangsfläche (32) in Richtung eines Außenumfangs liegt, und Endflächen (33a, 33b) des Schaumstoffmaterials in der Längsrichtung aneinanderliegen und verklebt sind,
**dadurch gekennzeichnet, dass**
die Endflächen (33a, 33b) derart angeordnet sind, dass sie parallel aneinanderliegen, so dass die Endflächen (33a, 33b) durch einen Klebstoff (41) befestigt sind, ohne eine Druckverformung zu erzeugen.

2. Luftreifen (1) nach Anspruch 1, wobei zumindest eine der Endflächen (33a, 33b) des Schaumstoffmaterials verjüngt ist.

3. Luftreifen (1) nach Anspruch 1, wobei die Endflächen (33a, 33b) des Schaumstoffmaterials derart verjüngt sind, dass sie sich unter demselben Neigungswinkel in Richtung der anderen Fläche wölben.

4. Luftreifen (1) nach einem der Ansprüche 1 bis 3, wobei
eine Größe des Schaumstoffmaterials an der Außenumfangsfläche (32) in der Längsrichtung nicht weniger als 100 % und nicht mehr als 105 % einer Länge des Innenumfangs des Reifenhauptkörpers (10) beträgt.

5. Luftreifen (1) nach einem der Ansprüche 1 bis 4, wobei
eine Größe einer Seite (34) des Schaumstoffmaterials von zwei Seiten (34, 35) entlang einer Längsrichtung kleiner ist als die andere Seite (35),
der Schalldämpfer (30), der durch Befestigen des Schaumstoffmaterials an der inneren Hohlraumfläche (14a) des Reifenhauptkörpers (10) ausgebildet ist, wobei die eine Seite (34) außerhalb eines Mittelpunkts in einer axialen Richtung des Reifenhauptkörpers (10) bereitgestellt ist und die andere Seite (35) in Richtung des Mittelpunkts bereitgestellt ist.

6. Luftreifen (1) nach Anspruch 5, wobei
die Endflächen (33a, 33b) des Schaumstoffmaterials derart verjüngt sind, dass sie sich zur anderen Seite (35) mit demselben Neigungswinkel wölben.

7. Luftreifen (1) nach Anspruch 5 oder 6, wobei
zwei oder mehr Schalldämpfer (30) in axialer Richtung des Reifenhauptkörpers (10) angeordnet sind.

8. Verfahren zur Herstellung eines Luftreifens (1), umfassend:
Schneiden, in einem ersten Schneideschritt, eines länglichen Schalldämpfer-Basiselements, das aus einem Schaumstoffmaterial hergestellt ist und einen rechteckigen Querschnitt an einer Fläche aufweist, die um einen vorbestimmten Winkel von einer Richtung senkrecht zu einer axialen Richtung geneigt ist;
Entnehmen einer vorbestimmten Größe des Schalldämpfer-Basiselements aus einer Schneideposition im ersten Schneideschritt, um eine Schneideposition einzustellen;
Schneiden des Schalldämpfer-Basiselements in einem zweiten Schneideschritt in einer Ebene, die in einer Richtung entgegengesetzt zu der des ersten Schneideschritts um einen vorbestimmten Winkel geneigt ist;
wobei eine Größe einer Innenumfangsfläche (31) des Schaumstoffmaterials in einer Längsrichtung kleiner ist als die einer Außenumfangsfläche (32), so dass die Außenumfangsfläche (32) in Richtung eines Außenumfangs liegt;
Bilden eines Schalldämpfers (30) durch Befestigen des Schalldämpfer-Basiselements, das im zweiten Schneideschritt zu einer Reifeninnenhohlraumfläche (14a) des Luftreifens (1) geschnitten wird, wobei Endflächen (33a, 33b) des Schaumstoffmaterials in der Längsrichtung aneinanderliegen und verklebt sind;
Anordnen der Endflächen (33a, 33b), so dass sie parallel liegen, wenn sie aneinanderliegen; und
Befestigen der Endflächen (33a, 33b) durch einen Klebstoff (41), ohne eine Druckverformung zu erzeugen.

## Revendications

1. Pneumatique (1), comprenant :
un corps principal de pneu (10) ; et
au moins un amortisseur de bruit (30) formé en apposant un matériau en mousse ayant une forme de plaque sur une surface de cavité intérieure (14a) du corps principal de pneu (10) pour former une forme d'anneau, une taille d'une surface circonférentielle intérieure (31) du matériau en mousse dans une direction longitudinale étant plus petite que celle d'une surface circonférentielle extérieure (32), de telle sorte que la surface circonférentielle extérieure (32) est orientée vers une circonférence extérieure, et des faces d'extrémité (33a, 33b) du matériau en mousse dans la direction longitudinale se touchant et étant reliées,
**caractérisé en ce que**
les faces d'extrémité (33a, 33b) sont agencées de manière à être parallèles lorsqu'elles se touchent, de telle sorte que les faces d'extrémité (33a, 33b) sont fixées par un adhésif (41) sans créer de déformation par compression.

2. Pneumatique (1) selon la revendication 1, dans lequel
au moins une des faces d'extrémité (33a, 33b) du matériau en mousse est effilée.

3. Pneumatique (1) selon la revendication 1, dans lequel
les faces d'extrémité (33a, 33b) du matériau en mousse sont effilées pour se renfler vers l'autre surface au même angle d'inclinaison.

4. Pneumatique (1) selon l'une quelconque des revendications 1 à 3, dans lequel
une taille du matériau en mousse au niveau de la surface circonférentielle extérieure (32) dans la direction longitudinale n'est pas inférieure à 100 % et n'est pas supérieure à 105 % d'une longueur de la circonférence intérieure du corps principal de pneu (10).

5. Pneumatique (1) selon l'une quelconque des revendications 1 à 4, dans lequel
une taille d'un côté (34) du matériau en mousse, de deux côtés (34, 35) le long d'une direction longitudinale, est plus petite que l'autre côté (35),
l'amortisseur de bruit (30) est formé en apposant le matériau en mousse sur la surface de cavité intérieure (14a) du corps principal de pneu (10) avec l'un des côtés (34) prévu vers l'extérieur d'un centre dans une direction axiale du corps principal de pneu (10), et l'autre côté (35) prévu vers le centre.

6. Pneumatique (1) selon la revendication 5, dans lequel
les faces d'extrémité (33a, 33b) du matériau en mousse sont effilées pour se renfler vers l'autre côté (35) au même angle d'inclinaison.

7. Pneumatique (1) selon la revendication 5 ou 6, dans lequel
deux ou plus de deux amortisseurs de bruit (30) sont agencés dans la direction axiale du corps principal de pneu (10) .

8. Procédé de fabrication d'un pneumatique (1), comprenant :
la découpe, dans une première étape de découpe, d'un élément de base d'amortisseur de bruit allongé fabriqué à partir d'un matériau en mousse et ayant une section transversale rectangulaire au niveau d'une surface inclinée d'un angle prédéterminé par rapport à une direction perpendiculaire à une direction axiale ;
la prise d'une taille prédéterminée de l'élément de base d'amortisseur de bruit à partir d'une position de découpe dans la première étape de découpe de manière à définir une position de découpe ;
la découpe, dans une deuxième étape de découpe, de l'élément de base d'amortisseur de bruit au niveau d'un plan incliné dans une direction opposée à celle de la première étape de découpe, d'un angle prédéterminé ;
une taille d'une surface circonférentielle intérieure (31) du matériau en mousse dans une direction longitudinale étant plus petite que celle d'une surface circonférentielle extérieure (32), de telle sorte que la surface circonférentielle extérieure (32) est orientée vers une circonférence extérieure ;
la formation d'un amortisseur de bruit (30) en apposant l'élément de base d'amortisseur de bruit découpé lors de la deuxième étape de découpe sur une surface de cavité intérieure de pneu (14a) du pneumatique (1), des faces d'extrémité (33a, 33b) du matériau en mousse dans la direction longitudinale se touchant et étant reliées ;
l'agencement des faces d'extrémité (33a, 33b) de manière à être parallèles lorsqu'elles se touchent ; et
la fixation des faces d'extrémité (33a, 33b) par un adhésif (41) sans créer de déformation par compression.
